# EUROPEAN PATENT SPECIFICATION

(11) **EP 4 387 925 B1**
(45) Date of publication and mention of the grant of the patent: **11.06.2025**
(21) Application number: 22757215.3
(22) Date of filing: 20.07.2022
(51) Int. Cl.: C01B 3/02, C01B 21/04, C25B 1/042, C25B 15/08, C01C 1/04

(54) **PROCESS FOR THE PREPARATION OF GREEN AMMONIA SYNTHESIS GAS**
VERFAHREN ZUR HERSTELLUNG VON GRÜNEM AMMONIAKSYNTHESEGAS
PROCÉDÉ DE PRÉPARATION DE GAZ DE SYNTHÈSE D'AMMONIAC VERT

(30) Priority: 19.08.2021 DK PA202100819
(43) Date of publication of application: 26.06.2024
(73) Proprietor: Topsoe A/S, 2800 Kgs. Lyngby (DK)
(72) Inventor: KNUDSEN, Lari Bjerg, 2770 Kastrup (DK); HAN, Pat A, 2765 Smørum (DK)
(74) Representative: Topsoe A/S
(86) International application number: PCT/EP2022/070321
(87) International publication number: WO 2023/020771

(56) References cited:
- EP-A1- 0 603 767
- WO-A1-2005/009894
- CN-B- 106 185 984
- US-A1- 2013 039 833
- US-A1- 2013 272 926
- US-A1- 2017 145 915

## Description

The present invention refers to a process, a system and a plant for producing green ammonia synthesis gas, wherein hydrogen is provided by electrolysis and N₂ is provided by an air separation unit, PSA or membrane separation and wherein oxygen or oxygen containing compounds in a stream of the hydrogen and a stream of the nitrogen are removed in a common deoxidation unit.

Hydrogen from electrolysis and nitrogen from PSA may contain impurities, such as O₂, H₂O , KOH or other, which are usually unwanted in the synthesis of ammonia. These impurities are typically removed by a cleaning unit in order to achieve a close to pure hydrogen and nitrogen ammonia synthesis gas.

If hydrogen is produced at low pressure, i.e. close to atmospheric pressure, approximately 0.1 bar g, it is compressed into the required pressure or the required synthesis pressure, which for NH₃ synthesis is approximately 100-300 bar g. If CO₂ or N₂ are produced at low pressure (e.g., 0.3-1.0 bar g for CO₂) they may be compressed into the required pressure, if necessary.

The standard solution therefore typically comprises a separate cleaning unit for H₂ and for N₂ and also a separate compressor for H₂ and for Another process for the preparation of green ammonia synthesis gas is disclosed in CN 106185984 A.

Any oxygen containing compound, in particular oxygen will be a poison to ammonia synthesis catalysts, therefor the specification of the hydrogen and nitrogen purity are normally very strict. In hydrogen production based on electrolysis, a gas clean-up system will typically be required. In nitrogen production, the high purity demand requires that air separation is carried out in cryogenic air separation unit (ASU), which makes the ammonia process costlier and/or less energy efficient.

The present invention provides for the reduction of the number of cleaning units and other equipment such as compressing units in a plant, thereby improving/reducing CAPEX.

The improvement to the standard known solutions described above, is based on employing pressure swing absorption for the separation of atmospheric air (PSA) into nitrogen and oxygen, which operates at near-ambient temperatures and differs significantly from cryogenic air separation , and on combining the streams (H₂+N₂), pressurizing the combined streams in an ammonia synthesis gas compressor and subsequently cleaning the pressurized combined streams in one single unit, in particular a common hydrogenation unit, wherein oxygen is removed by catalytic hydrogenation to water.

Thus, in one aspect the present invention provides a process for producing ammonia synthesis gas comprising the steps of:
(a) providing a separate stream comprising nitrogen by pressure swing absorption of ambient air;
(b) providing a separate stream comprising hydrogen by electrolysis of water and/or steam;
(c) combining the separate streams obtained in steps a) and b) into a mixed stream comprising hydrogen and nitrogen;
(d) pressurizing the mixed stream from step (c); and
(e) removing residual amounts of oxygen further contained in the mixed stream by catalytic hydrogenation of the oxygen with a part of the hydrogen contained in the mixed stream upstream step (d) and/or downstream step (d) and/or during step (d) to produce the ammonia synthesis gas.

When pressurizing the mixed stream prior to the deoxidation step, heat energy is applied to the mixed stream and the temperature of the gas increases. Thereby, a start up heater for the catalytic hydrogenation can be avoided.

Thus, according to the invention, the mixed stream of hydrogen and nitrogen is pressurized in an ammonia synthesis gas compressor upstream the catalytic hydrogenation.

The ammonia reaction requires a stoichiometric mole ratio of H₂:N₂ of about 3. Some of the amount of hydrogen is used in the hydrogenation reaction.

Thus, in another preferred embodiment, the mixed stream comprises hydrogen and nitrogen in an amount to provide a molar ratio of H₂ to N₂ of between 2.8 and 3.2.

In another preferred embodiment, the electrolysis is performed in a solid oxide electrolysis cell.

In another preferred embodiment, the catalytic hydrogenation is performed in presence of a hydrogenation catalyst comprising platinum and/or palladium Another aspect of the invent is a system for producing ammonia synthesis gas comprising:
a) one or more pressure swing absorption units for providing a separate stream comprising nitrogen;
b) one or more electrolysis units for providing a separate stream comprising hydrogen;
c) combining means for providing a mixed stream comprising the separate hydrogen stream and the separate nitrogen stream;
d) a compression unit for pressurizing the mixed stream; and
e) an oxygen hydrogenation unit for the catalytic hydrogenation of oxygen contained in the pressurized mixed stream.

The compression unit is an ammonia synthesis gas compressor arranged upstream or downstream the hydrogenation unit.

In another preferred embodiment, the electrolysis unit is a solid oxide electrolysis cell.

In another preferred embodiment, hydrogenation unit contains a hydrogenation catalyst comprising platinum and/or palladium.

A third aspect of the invention is a plant comprising a system according to any one of the above embodiments, for operating a process according to any one of the above embodiments.

In summary, the advantages of the invention are:
- Low cost of PSA compared to cryogenic ASU for all capacities
- PSA is more flexible in operation. Low turn down and fast start-up time compared cryogenic ASU
- Dynamic ammonia loop operates on varying power input from solar and wind between 5 to 100% load. Therefore, is the flexible PSA an advantage in dynamic ammonia loops operated on renewal energy.
- Combined hydrogenation unit for the removal of oxygen in both hydrogen and nitrogen feed streams instead of individual unit for each feed stream.
- As the hydrogenation unit is arranged upstream at the discharge of synthesis gas compressor the need for start up heater will be eliminated.
- Higher pressure will favor reaction and reduce catalyst volume in the hydrogenation unit.
- Higher temperature will favor hydrogenation of oxygen.

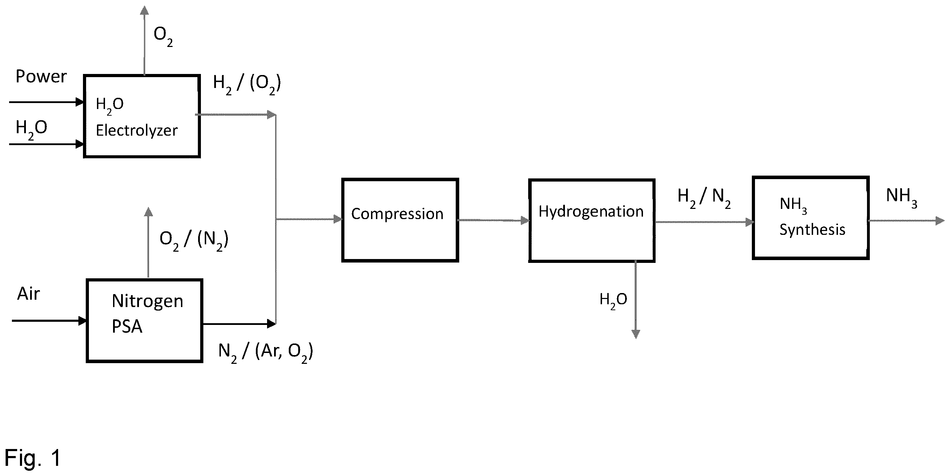

Figure 1 in the drawings shows a preferred embodiment of the present invention for generation of H₂ and N₂ streams for synthesizing green ammonia,
where compression step is performed, upstream to a joint oxygen removal from a combined stream of or H₂ and N₂.

The hydrogen stream from the electrolyzer typically contains 99.9 mole% H₂ and 0.1 mole% O₂. The nitrogen stream from the PSA unit typically contains 99.2 mole% N₂, 0.3 mole% O₂ and 0.5 mole% Ar as impurities.

As mentioned hereinbefore, oxygen in ammonia synthesis gas will poison the ammonia catalyst and is therefore necessary to remove the oxygen contained in the hydrogen stream and in the nitrogen stream by catalytic hydrogenation of the oxygen to water.

By the present invention the streams are combined in a molar ratio of H₂ to N₂ of about 2.8 to 3.2 and compressed in an upstream synthesis gas compressor and subsequently cleaned in hydrogenation unit.

In the hydrogenation unit, oxygen will be removed by a catalyzed reaction with hydrogen to form water. Most of the water will be knocked out in an interstage cooling and separation before the thus prepared ammonia synthesis gas is introduced into a downstream ammonia loop.

## Claims

1. Process for producing an ammonia synthesis gas comprising the steps of:
(a) providing a separate stream comprising nitrogen by pressure swing absorption of ambient air;
(b) providing a separate stream comprising hydrogen by electrolysis of water and/or steam;
(c) combining the separate streams obtained in steps a) and b) into a mixed stream comprising hydrogen and nitrogen;
(d) pressurizing the mixed stream from step (c); and
(e) removing residual amounts of oxygen further contained in the mixed stream by catalytic hydrogenation of the oxygen with a part of the hydrogen contained in the mixed stream upstream step (d) and/or downstream step (d) and/or during step (d) to produce the ammonia synthesis gas, wherein the mixed stream comprising hydrogen and nitrogen is pressurized in an ammonia synthesis gas compressor upstream the catalytic hydrogenation.

2. Process according to claim 1, wherein the mixed stream comprises hydrogen and nitrogen in an amount to provide a molar ratio of H₂ to N₂ of between 2.8 and 3.2.

3. Process according to claims 1 or 2, wherein the electrolysis is performed in a solid oxide electrolysis cell.

4. Process according to any one of claims 1 to 3, wherein the catalytic hydrogenation is performed in presence of hydrogenation catalyst.

5. System for producing ammonia synthesis gas comprising:
a) one or more pressure swing absorption units for providing a separate stream comprising nitrogen;
b) one or more electrolysis units for providing a separate stream comprising hydrogen;
c) combining means for providing a mixed stream comprising the separate hydrogen stream and the separate nitrogen stream;
d) a compression unit for pressurizing the mixed stream; and
e) an oxygen hydrogenation unit for the catalytic hydrogenation of oxygen contained in the pressurized mixed stream, wherein the compression unit is an ammonia synthesis gas compressor arranged upstream the hydrogenation unit.

6. System according to claim 5, wherein the electrolysis unit is a solid oxide electrolysis cell.

7. System according to claims 5 or 6, wherein the hydrogenation unit contains a hydrogenation catalyst.

8. Plant comprising a system according to any one of claims 5 to 7, for operating a process according to any one of claims 1 to 4.

## Patentansprüche

1. Prozess zum Herstellen eines Ammoniaksynthesegases, der die folgenden Schritte umfasst:
(a) Bereitstellen einer separaten, Stickstoff umfassenden Strömung durch Druckwechselabsorption von Umgebungsluft;
(b) Bereitstellen einer separaten, Wasserstoff umfassenden Strömung durch Elektrolyse von Wasser und/oder Dampf;
(c) Kombinieren der in den Schritten a) und b) erhaltenen separaten Strömungen zu einer gemischten Strömung, welche Wasserstoff und Stickstoff umfasst;
(d) Beaufschlagen der gemischten Strömung aus Schritt (c) mit Druck; und
(e) Entfernen von Restmengen an weiter in der gemischten Strömung enthaltenem Sauerstoff durch katalytische Hydrierung des Sauerstoffs mit einem Teil des in der gemischten Strömung enthaltenen Wasserstoffs vor Schritt (d) und/oder nach Schritt (d) und/oder während Schritt (d) zur Erzeugung des Ammoniaksynthesegases, wobei die Wasserstoff und Stickstoff umfassende gemischte Strömung in einem Ammoniaksynthesegaskompressor vor der katalytischen Hydrierung mit Druck beaufschlagt wird.

2. Prozess nach Anspruch 1, wobei die gemischte Strömung Wasserstoff und Stickstoff in einer Menge umfasst, um ein Molverhältnis von H₂ zu N₂ zwischen 2,8 und 3,2 bereitzustellen.

3. Prozess nach den Ansprüchen 1 oder 2, wobei die Elektrolyse in einer Festoxidelektrolysezelle durchgeführt wird.

4. Prozess nach einem der Ansprüche 1 bis 3, wobei die katalytische Hydrierung in Gegenwart eines Hydrierungskatalysators durchgeführt wird.

5. System zum Herstellen eines Ammoniaksynthesegases, umfassend:
a) eine oder mehrere Druckwechselabsorptionseinheiten zum Bereitstellen einer separaten, Stickstoff umfassenden Strömung;
b) eine oder mehrere Elektrolyseeinheiten zum Bereitstellen einer separaten, Wasserstoff umfassenden Strömung;
c) Kombinationsmittel zum Bereitstellen einer gemischten Strömung, die die separate Wasserstoffströmung und die separate Stickstoffströmung umfasst;
d) eine Kompressionseinheit zum Beaufschlagen der gemischten Strömung mit Druck; und
e) eine Sauerstoffhydrierungseinheit zur katalytischen Hydrierung von Sauerstoff, der in der mit Druck beaufschlagten gemischten Strömung enthalten ist, wobei die Kompressionseinheit ein vor der Hydrierungseinheit angeordneter Ammoniaksynthesegaskompressor ist.

6. System nach Anspruch 5, wobei die Elektrolyseeinheit eine Festoxidelektrolysezelle ist.

7. System nach Ansprüchen 5 oder 6, wobei die Hydrierungseinheit einen Hydrierungskatalysator enthält.

8. Anlage, umfassend ein System nach einem der Ansprüche 5 bis 7 zum Betreiben eines Prozesses nach einem der Ansprüche 1 bis 4.

## Revendications

1. Procédé de production de gaz de synthèse d'ammoniac comprenant les étapes consistant à :
(a) fournir un flux distinct comprenant de l'azote par absorption à pression modulée d'air ambiant ;
(b) fournir un flux distinct comprenant de l'hydrogène par électrolyse d'eau et/ou de vapeur ;
(c) combiner les flux distincts obtenus aux étapes a) et b) en un flux mixte comprenant de l'hydrogène et de l'azote ;
(d) mettre sous pression le flux mixte de l'étape (c) ; et
(e) éliminer des quantités résiduelles d'oxygène contenues en outre dans le flux mixte par hydrogénation catalytique de l'oxygène avec une partie de l'hydrogène contenu dans le flux mixte en amont de l'étape (d) et/ou en aval de l'étape (d) et/ou pendant l'étape (d) pour produire le gaz de synthèse d'ammoniac, dans lequel le flux mixte comprenant de l'hydrogène et de l'azote est mis sous pression dans un compresseur de gaz de synthèse d'ammoniac en amont de l'hydrogénation catalytique.

2. Procédé selon la revendication 1, dans lequel le flux mixte comprend de l'hydrogène et de l'azote en une quantité permettant d'obtenir un rapport molaire de H₂ à N₂ compris entre 2,8 et 3,2.

3. Procédé selon la revendication 1 ou 2, dans lequel l'électrolyse est réalisée dans une cellule d'électrolyse à oxyde solide.

4. Procédé selon l'une quelconque des revendications 1 à 3, dans lequel l'hydrogénation catalytique est réalisée en présence d'un catalyseur d'hydrogénation.

5. Système de production d'un gaz de synthèse d'ammoniac, comprenant :
a) une ou plusieurs unités d'absorption à pression modulée pour fournir un flux distinct comprenant de l'azote ;
b) une ou plusieurs unités d'électrolyse pour fournir un flux distinct comprenant de l'hydrogène ;
c) des moyens de combinaison pour fournir un flux mixte comprenant le flux d'hydrogène distinct et le flux d'azote distinct ;
d) une unité de compression pour mettre le flux mixte sous pression ; et
e) une unité d'hydrogénation d'oxygène pour l'hydrogénation catalytique de l'oxygène contenu dans le flux mixte mis sous pression, dans lequel l'unité de compression est un compresseur de gaz de synthèse d'ammoniac agencé en amont de l'unité d'hydrogénation.

6. Système selon la revendication 5, dans lequel l'unité d'électrolyse est une cellule d'électrolyse à oxyde solide.

7. Système selon la revendication 5 ou 6, dans lequel l'unité d'hydrogénation contient un catalyseur d'hydrogénation.

8. Installation comprenant un système selon l'une quelconque des revendications 5 à 7, pour mettre en œuvre un procédé selon l'une quelconque des revendications 1 à 4.
